# EUROPEAN PATENT APPLICATION

(11) **EP 4 749 566 A1**
(43) Date of publication of application: **27.05.2026**
(21) Application number: 25207861.3
(22) Date of filing: 10.10.2025
(51) Int. Cl.: G06T 7/00

(54) **QUALITY CONTROL OF PACKAGES PRODUCED IN A PACKAGING MACHINE**

(30) Priority: 22.11.2024 IT 202400026355
(71) Applicant: Tetra Laval Holdings & Finance S.A., 1009 Pully (CH)
(72) Inventor: Sacerdoti, Diletta, 41123 Modena (IT); Verasani, Mattia, 41123 Modena (IT); Egidi, Sara, 41123 Modena (IT); Clo', Davide, 41123 Modena (IT); Fiori, Mauro, 41123 Modena (IT); Zagnoli, Lorenzo, 41123 Modena (IT)
(74) Representative: Tetra Pak Patent Attorneys

(57) **Abstract**

The present invention relates to a quality control apparatus for quality control of packages. The quality control apparatus comprising: a memory storing a machine learning model being trained to identify defects in 3D representations of packages; and circuitry. The circuitry is configured to execute: an image obtaining function configured to, from an image capturing device, obtain a plurality of images depicting a package from a plurality of view angles; a 3D rendering function configured to render a 3D representation of the package having as input the plurality of images; and a quality control function configured to perform quality control of the package by inputting the rendered 3D representation of the package into the machine learning model. A method of generating a training dataset for a machine learning model is also presented.

## Description

### Technical field

The present invention relates to the field of packaging technology. More particularly, it is related to a methods and apparatuses for quality control of packages produced in a packaging machine, particularly packages filled with food.

### Background of the invention

Within the food industry today, the food package technology plays an important part. The food package has several important functions. Apart from branding of the product and presenting the customers with information, the food package also has an important role of ensuring food safety. The packaging materials used in the food package can be designed to provide strength and stability, so that the packages are not damaged during transportation. Furthermore, the packaging materials can form a protective environment for the food product so that it is protected from for example bacteria, germs, oxygen and sun light, thus prolonging shelf life. However, the packaging material is not the only thing that is important in the package. The package needs also to be sealed properly. Any damages to the packaging material or errors in the sealing can result in a breach of the protective environment. In a roll-fed packaging system for instance, the packages are made by forming a longitudinal sealing along an overlap between two ends of the packaging material such that a tube is formed. Thereafter, the packages can be formed from the tube by making a top and bottom transversal sealing. According to another example, a blank-fed packaging system may be used for producing packages. In a is blank-fed packaging system one or more seals are made upon forming the packages.

There are thus many aspects of the food package which are important. Ensuring the quality of food packages produced in packaging machines is not an easy task. Today, a common way of doing this is to evaluate batches of the finished products manually. In addition to visually examining the exterior of the package, this also means opening packages to assess the sealing formed on the inside of the package. However, this is a tedious task which also leads to waste of product. Further, to ensure the quality, large quantities of packages has to be assessed. It is therefore a need for an improved way of quality control of packages produced in packaging machines.

### Summary of the invention

The herein disclosed technology seeks to at least partly mitigate, alleviate or eliminate one or more of the above-mentioned deficiencies and disadvantages in the prior art. In particular, it is an object to provide quality control of packages produced in a packaging machine.

The inventors of the present inventive concept have realized a new and improved way of evaluating the quality of packages utilizing machine learning. Especially, an improved way of evaluating the quality of packages based on a 3D representation of the package, the 3D representation being generated using a plurality of 2D image of the package and a 3D rendering function has been invented. The present inventive concept provides for improved identification of e.g. dents in the package, this due to the 3D representation of the package. Further, the 3D representation of the package allow for increased accuracy in classifying identified defects.

Various aspects and embodiments of the disclosed invention are defined below and in the accompanying independent and dependent claims.

According to a first aspect, there is provided a quality control apparatus for quality control of packages. The quality control apparatus comprises: a memory and circuitry. The memory is storing a machine learning model being trained to identify defects in 3D representations of packages. The circuitry is configured to execute: an image obtaining function configured to, from an image capturing device, obtain a plurality of images depicting a package from a plurality of view angles; a 3D rendering function configured to render a 3D representation of the package having as input the plurality of images; and a quality control function configured to perform quality control of the package by inputting the rendered 3D representation of the package into the machine learning model.

By the wording "quality control" it is herein meant an evaluation of one or more quality aspects of the package. A quality aspect may be related to food safety, such as looking for any damages to the package or package material or deficiency or anomaly in the forming of the package (e.g. in sealing or folding the package). Another quality aspect may be related to aesthetics of the package, such as looking for any deformations in the package (which also could be related to food safety) or misprints/misalignment in the décor of the package.

The 3D rendering function allow for a several advantages over traditional 3D scanning technologies like structured-light 3D scanners or laser scanners. Examples of such advantaged are cost, accessibility, efficiency, and level of detail. The 3D rendering function requires only a set of 2D images, which can be captured with a standard camera and computational resources. On the other hand, traditional 3D scanning technologies, requires dedicated hardware such as a structured-light 3D scanner or a laser scanner. Further, the 3D rendering function excels at capturing complex and intricate details, making this way of 3D rendering especially suitable for quality control applications. Traditional 3D scanning technologies may struggle with reflective or transparent surfaces, as the technology relies on light or lasers being reflected back to sensors. These scanners often have trouble reconstructing fine details in such cases, leading to noisy or incomplete data. The 3D rendering function requires no special setup apart from capturing images from multiple angles. This can be done anywhere, making it suitable for fieldwork or environments where traditional scanning devices may be impractical. Hence, the 3D rendering function allows for flexibility, as no fixed environment or controlled lighting setup is necessary. Traditional 3D scanning technologies often requires careful calibration, controlled lighting conditions, and a stable environment to capture accurate data. Setting up scanners can be time-consuming, and these devices tend to be less portable due to their reliance on specific hardware configurations. Hence, the present invention allow for quality control of packages with high level of detail in the 3D representation of the packages. Using a 3D representation of the packages as compared with a 2D representation allow for considering morphology of the surfaces of the packages in the quality control. For example, a depth of a dent may be taken into account in the quality control. This, e.g., allow for an increase in accuracy of a severity of a defect.

As compared with the currently implemented manual quality control of packages, the present invention provide for a fully automated way to detect packages with or without defects. The fully automated way according to the present invention is quick and robust due to the 3D rendering function and may be deployed both as an offline and an online solution. In this context, by offline is meant to perform the quality control on packages already produced in a food packaging system and extracted therefrom. Further, in this context, by online is meant to perform the quality control on packages while they are still within the food packaging system, typically still within a packaging machine of the food packaging system.

The 3D rendering function may be based on Neural Radiance Field, NeRF, employing a fully connected deep neural network and being configured to render the 3D representation of the package using the plurality of images of the package captured at the plurality of views as input.

The 3D rendering function may be based on 3D Gaussian Splatting and being configured to render the 3D representation of the package using the plurality of images of the package captured at the plurality of views as input.

The machine learning model has typically been trained on reference 3D representations of reference packages with known defects, e.g. present or absent. reference 3D representations of reference packages may be rendered by the 3D rendering function discussed above. Reference packages may be produced in a reference production line during a training phase. Alternatively or in combination, reference packages may be produced by hand. The reference packages may be analyzed and one or more defects, i.e. presence, absence and optionally type of defect, may be identified on the reference packages. That is, subsets of reference packages may be associated with respective defects within a plurality of defects. The reference packages and/or the reference 3D representations of the reference packages may comprise annotations and labels associated with known defects.

The machine learning model being trained to identify defects in 3D representations of packages is typically configured to output one or more of a type of defect of a defective package, a location of a defect of a defective package, and a severity of the defect. The machine learning model receives as an input the 3D representation of the package and outputs the one or more of a type of defect of a defective package, a location of a defect of a defective package, and a severity of the defect. The defects may comprise physical defects present on the packages. The machine learning model may identify the presence or absence of defects on the packages and optionally a type and/or location of defect. In particular, the machine learning model may be configured to identify the presence of a defect and to classify the identified defect according to different types of defects. The types of defects may comprise for example: no defect, wrinkles in the material of the packages, unsealed flaps of the packages, torn or cloudy pre-punched holes in the packages, dents in the packages, delamination in opening areas of the packages, etc..

The circuitry may further be configured to execute a reporting function configured to determine identification data, ID, of the package and associate the ID with the output from the machine learning model.

According to a second aspect, there is provided a method of generating a training dataset for a machine learning model configured to output one or more of a type of defect of a defective package, a location of a defect of a defective package, and a severity of the defect. The method comprises, for each of a plurality of reference packages having a respective known defect: obtaining a plurality of images depicting the reference package from a plurality of view angles; rendering a 3D representation of the reference package using a 3D rendering function having as input the plurality of images; and associating the 3D representation with the respective known defect. The method of generating the training dataset for the machine learning model further comprises, storing the respective 3D representations of the plurality of reference packages and the thereto associated known defects as the training dataset.

The method of generating the training dataset for the machine learning model may further comprise to classify the defects of the reference packages. The task of classifying the defects of the reference packages may comprise sending a defect classifying task to a user group. The user group comprising one or more expert users of the type of package the reference packages belongs to. Hence, the classifying is typically performed by one or more humans. The defect classifying task may comprise one or more images of the respective reference package the rendered 3D representation of the respective reference package and/or the reference package itself. The task of classifying the defects of the reference packages may further comprise receiving a defect classifying result from the user group. The defect classifying result may thereafter be set as the known defect.

According to a third aspect, there is provided a training method of training the machine learning model configured to identify and classify defects in 3D representations of packages. The machine learning model being configured to output one or more of a type of defect of a defective package, a location of a defect of a defective package, and a severity of the defect. The training method comprises training the machine learning model by adjusting weights of the machine learning model as a function of a training dataset generated in accordance with the second aspect.

According to a fourth aspect, there is provided a quality control method. The quality control method is for performing quality control on a package produced in a packaging machine, preferably a packaging machine within a food packaging system. The quality control method is computer implemented. The quality control method comprises: obtaining a plurality of images depicting the package from a plurality of view angles; rending, using a 3D rendering function having as input the plurality of images, a 3D representation of the package; and performing a quality control on the package by inputting the rendered 3D representation of the package into a machine learning model being trained in accordance with the third aspect and receiving an output from the machine learning model. As discussed above, the output from the machine learning model comprises one or more of: a type of defect of a defective package, a location of a defect of a defective package, and a severity of the defect. Note that the output from the machine learning model may be that no defect is identified.

The above mentioned features of the quality control apparatus, when applicable, apply to this fourth aspect as well. In order to avoid undue repetition, reference is made to the above.

According to a fifth aspect, there is provided a non-transitory computer-readable storage medium. The non-transitory computer-readable storage medium storing one or more programs configured to be executed by one or more processors of a processing system, the one or more programs comprising instructions for performing the method according to the fourth aspect.

According to a sixth aspect, there is provided a quality control system for quality control of packages. The quality control system comprises: an image capturing device configured to capture a plurality of images depicting a package from a plurality of view angles; and a quality control apparatus according to the first aspect.

The image capturing device may be a multicamera set-up configured to capture the plurality of images depicting the package from the plurality of view angles.

The image capturing device may be a camera on a robotic arm configured to capture the plurality of images depicting the package from the plurality of view angles.

According to a seventh aspect, there is provided a food packaging system. The food packaging system comprises a packaging machine configured to produce packages filled with food; and a quality control system according to the sixth aspect, wherein the image capturing device is configured to capture images depicting a package produced in the packaging machine. Especially, the image capturing device may be configured to capture images depicting a package produced in the packaging machine online in the food packaging system.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

### Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Figure 1a illustrates, by way of example, a quality control system for quality control of packages according to one alternative embodiment.
Figure 1b illustrates, by way of example, a quality control system for quality control of packages according to another alternative embodiment.
Figure 2 schematically illustrates the quality control apparatus of the quality control system of Figs 1a and 1b in more detail.
Figure 3 is a flow chart illustrating the steps of a method of generating a training dataset for the machine learning model used in the quality control apparatus of the quality control system.
Figure 4 illustrates, by way of example, a food packaging system configured to produce packages filled with food and comprising a quality control system.
Figure 5 is flow chart illustrating the steps of a quality control method of performing quality control on a package produced in a food packaging system.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

It will also be appreciated that when the present disclosure is described in terms of a method, it may also be embodied in an apparatus or device comprising one or more processors, one or more memories coupled to the one or more processors, where computer code is loaded to implement the method. For example, the one or more memories may store one or more computer programs that perform the steps, services and functions disclosed herein when executed by the one or more processors.

It is also to be understood that the terminology used herein is for the purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth.

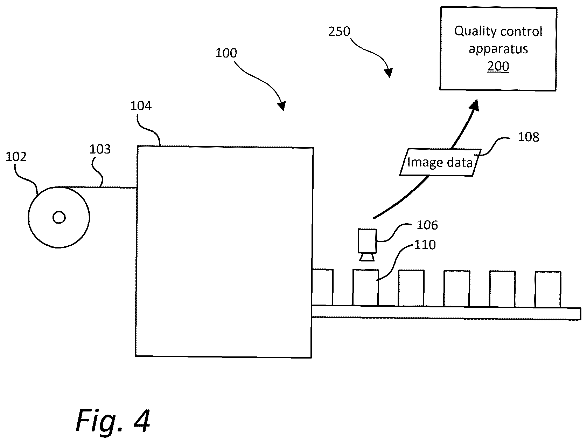

The present invention is directed towards quality control of packages. Preferably, packages made from carton based material. The packages are typically filled with food. The packages are typically produced in a food packaging system configured to produce the packages. Such a food packaging system will be discussed in more detail below in connection with Fig. 4.

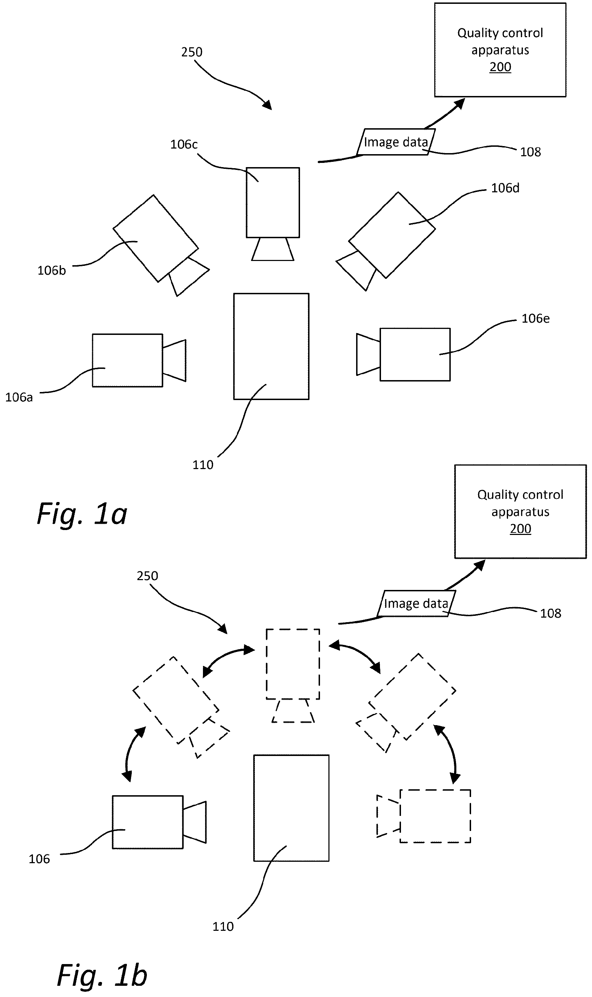

Figs 1a and 1b generally illustrates, by way of two examples, a quality control system 250 for quality control of packages 110. The quality control system 250 comprises an image capturing device 106, 106a-e and a quality control apparatus 200.

The image capturing device 106, 106a-e is configured to capture a plurality of images 108 depicting a specific package 110 from a plurality of view angles, i.e. from various angles. Each image of the plurality of images 108 being a 2D representation of at least a portion of the specific package. For the different images in the plurality of images 108 tracking of the camera position and orientation is also registered. In order to achieve this the image capturing device 106, 106a-e may be set-up in different ways. As being illustrated in connection with Fig. 1a, the image capturing device 106a-e may be a multicamera set-up configured to capture the plurality of images 108 depicting the specific package 110 from the plurality of view angles. Hence, each camera in the multicamera set-up may be configured to capture one of the plurality of images 108. The plurality of images may is such case be captured simultaneously. As being illustrated in connection with Fig. 1b, the image capturing device 106 may be a single camera on a robotic arm configured to capture the plurality of images 108 depicting the specific package 110 from the plurality of view angles. Hence, the single camera may be moved by the robotic arm to capture the plurality of images 108 depicting the specific package 110 from the plurality of view angles. Hence, the plurality of images 108 may be captured one after the other wherein the camera has been moved in between each capturing of an image. According to yet another alternative, the specific package 110 may be moved and the camera is capturing the plurality of images 108 depicting the specific package 110 from the plurality of view angles as the specific package 110 is moved. It is readily understood that the above discussed alternative ways of obtaining the plurality of images 108 depicting the specific package 110 from the plurality of view angles may be combined as long as the output is the plurality of images 108 depicting the specific package 110 from the plurality of view angles.

The image capturing device 106, 106a-c may comprise a light source adapted to illuminate the package. The light source may use visible light, infrared, IR, light, ultraviolet, UV, light, or any combination thereof.

The quality control apparatus 200 is configured to perform quality control of packages 110. Input to the quality control apparatus 200 comprises a plurality of images 108 depicting a package 110 to be controlled from a plurality of view angles. Hence, the quality control apparatus 200 is configured to obtain images from the image capturing device 106, 106a-e. Herein, the quality control apparatus 200 receives the image from the image capturing device 306a-c through any suitable communication protocol. Optionally, identification data, ID, of the package associated with a specific set of plurality of images 108 depicting the package 110 from the plurality of view angles may also be received. The quality control apparatus 200 may output various data and or control signals. For example, the quality control apparatus 200 may output a signal comprising and action to be performed to the packaging machine having produced the package being subjected for the quality control. According to another example, the quality control apparatus 200 may output updated settings for the packaging machine having produced the package being subjected for the quality control.

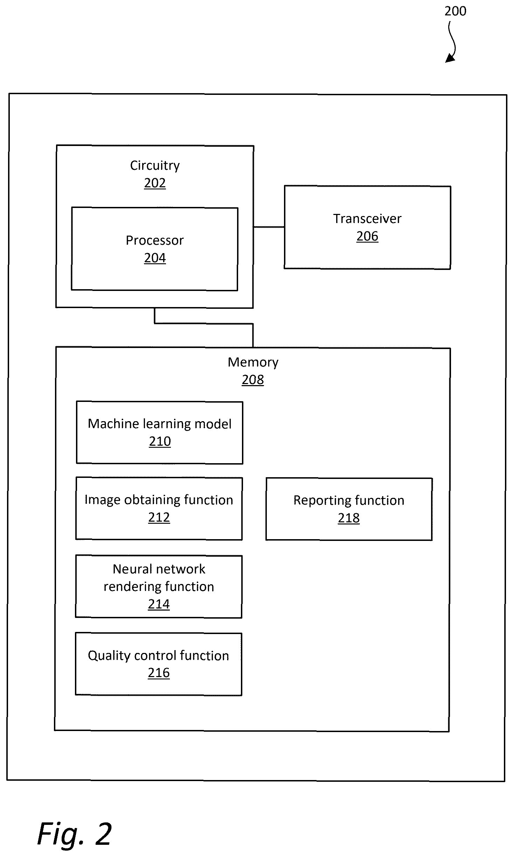

The quality control apparatus 200 will now be discussed in more detail in connection with Fig. 2. The quality control apparatus 200 comprises circuitry 202. The circuitry 202 may physically comprise one single circuitry device. Alternatively, the circuitry 202 may be distributed over several circuitry devices. The quality control apparatus 200 may further comprise a transceiver 206. The quality control apparatus 200 further comprise a memory 208. The circuitry 202 being communicatively connected to the transceiver 206 and/or the memory 208. The circuitry 202 may comprise a data bus, and the circuitry 202 may communicate with the transceiver 206 and/or the memory 208 via the data bus.

The circuitry 202 is configured to carry out overall control of functions and operations of the quality control apparatus 200. The circuitry 202 may include a processor 204, such as a central processing unit, CPU, a graphics processing unit, GPU, a microcontroller, or a microprocessor. The processor 204 may be configured to execute program code stored in the memory 208, in order to carry out functions and operations of the quality control apparatus 200.

The transceiver 206 may be configured to enable the quality control apparatus 200 to communicate with other devices or apparatuses. The quality control apparatus 200 may be communicatively connected to a control system of a packaging machine by the transceiver 206. The quality control device 200 may be communicatively connected to the image capturing device 106, 106a-e by the transceiver 206. The transceiver 206 may both transmit data from and receive data to the quality control apparatus 200. The transceiver 206 may communicate over wired or wireless communication protocols, e.g. Bluetooth, Wi-Fi, cellular communication etc..

The memory 208 may be a non-transitory computer-readable storage medium. The memory 208 may comprise one or more of a buffer, a flash memory, a hard drive, a removable media, a volatile memory, a non-volatile memory, a random access memory RAM, or another suitable device. In a typical arrangement, the memory 208 may include a non-volatile memory for long term data storage and a volatile memory that functions as system memory for the quality control apparatus 200. The memory 208 may exchange data with the circuitry 202 over the data bus. Accompanying control lines and an address bus between the memory 208 and the circuitry 202 also may be present.

The memory 208 is storing a pre-trained machine learning model 210. Alternatively, or in combination, to storing the pre-trained machine learning model 210 in the memory 208 of the quality control apparatus 200, the pre-trained machine learning model may be provided in a remote server, such as in the cloud.

The pre-trained machine learning model 210 being trained to identify and possibly also classify defects in 3D representations of packages. The training is typically performed on image data from the manufacturing and food domain. The machine learning model 210 may be an unsupervised machine learning model. An example of such an unsupervised machine learning model is a machine learning model based on anomaly detection in a point cloud space. Such a machine learning model may be configured to detect any defects when a point cloud distribution of the rendered 3D representation of package deviates from a nominal conditional. Alternatively, the machine learning model 210 may be an supervised machine learning model. Such supervised machine learning model may be based on Rotation Invariant Surface Attention-Augmented Convolutions, being a convolutional neural network architecture designed for 3D point cloud classification and segmentation tasks. As readily understood, alternative machine learning models being trained to identify and possibly also classify defects in 3D representations of packages may be used.

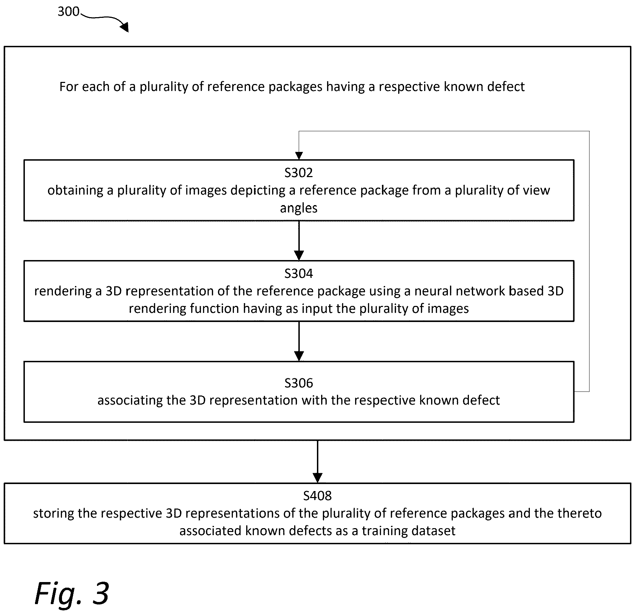

The machine learning model 210 may have been trained on 3D representations of reference packages with known defects. The training of the pre-trained machine learning model 210 will be discussed in more detail below in connection with Fig. 3. The machine learning model 210 is configured to output one or more of a type of defect of a defective package, a location of a defect of a defective package, and a severity of the defect. Note that the output from the machine learning model 210 may be that no defect is identified.

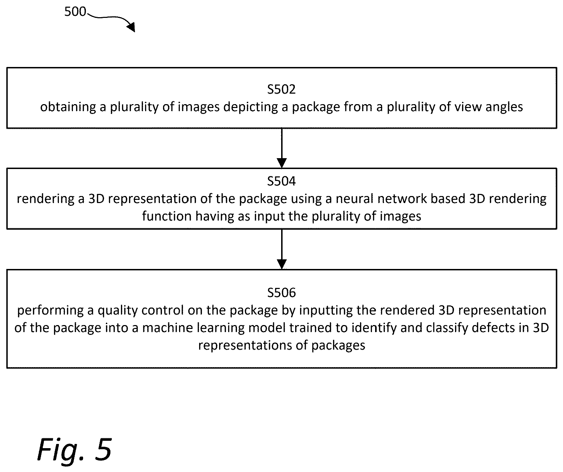

Functions and operations of the quality control apparatus 200 may be implemented in the form of executable logic routines, e.g., lines of code, software programs, etc., that are stored on a non-transitory computer readable recording medium, e.g., the memory 208, of the quality control apparatus 200 and are executed by the circuitry 202, e.g. using the processor 204. Put differently, when it is stated that the circuitry 202 is configured to perform a specific operation, or execute a specific function, the processor 204 of the circuitry 202 may be configured execute program code portions stored on the memory 208, wherein the stored program code portions correspond to the specific operation or function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 500 that will be discussed below in connection with Fig. 5. Also, while the described functions and operations may be implemented in software, such functionality may as well be carried out via dedicated hardware or firmware, or some combination of one or more of hardware, firmware, and software. The following operations may be performed by the quality control apparatus 200, and may be stored as functions on a non-transitory computer readable recording medium.

The circuitry 202 is configured to execute an image obtaining function 212. The image obtaining function 212 is configured to obtain a plurality of images 108 depicting a package 110 to be quality controlled from a plurality of view angles. Typically, the plurality of images 108 are obtained from the image capturing device 106, 106a-e. Each obtained image of the plurality of images 108 is depicting at least a portion of the package 110. Each obtained image of the plurality of images 108 is depicting the package 110 from a differ view angle. A number of obtained images in the plurality of images 108 may be in the range of 20-50 images. Together the plurality of images 108 typically depict the entire package. Alternatively, together the plurality of images 108 depict a portion of the package, such as a portion of the package comprising an opening means, such as a cap. The obtaining function 210 may obtain the plurality of images 108 in response to sending an instruction signal to the image capturing device 106, 106a-e to capture the images.

The circuitry 202 is further configured to execute a 3D rendering function 214. The 3D rendering function 214 is configured to render a 3D representation of the package. The 3D rendering function 214 is having as input the plurality of images 108. Possibly also data related to the respective view angle of each image is an input to the 3D rendering function 214. An example of such data may be camera position and orientation for the different images in the plurality of images 108. Depending on what is depicted in the plurality of input images, the 3D representation may be of the full package or of a portion of the package. The 3D rendering function 214 is typically based on Neural Radiance Field, NeRF, which leverages deep learning to generate highly realistic 3D representations from a set of 2D images. The neural network architecture which NeRF typically employs a fully connected deep neural network, often of multi-layer perceptron, MLP, type. The present invention is not directed towards development of NeRF, the methodology of NeRF is just used. Hence, for a more detailed explanation on how, NeRF, is to be used to generate a 3D representation from a set of 2D images reference is given to the literature, see e.g. Mildenhall, Ben; Srinivasan, Pratul P.; Tancik, Matthew; Barron, Jonathan T.; Ramamoorthi, Ravi; Ng, Ren (2020). "NeRF: Representing Scenes as Neural Radiance Fields for View Synthesis". In Vedaldi, Andrea; Bischof, Horst; Brox, Thomas; Frahm, Jan-Michael (eds.). Computer Vision - ECCV 2020. Lecture Notes in Computer Science. Vol. 12346. Cham: Springer International Publishing. pp. 405-421.

The 3D rendering function 214 may alternatively be based on Gaussian Splatting. 3D Gaussian Splatting is a method for reconstructing and rendering a 3D representation from 2D images, to create realistic and efficient 3D representations. A neural network may be used to extract relevant features from 2D images. These features may then be mapped to a 3D Gaussian field, and iteratively the field's parameters may then be optimized to create a realistic, continuous 3D representation. This method enables efficient, high-quality rendering that balances computational efficiency with visual fidelity, making it a promising approach for 3D rendering applications. The present invention is not directed towards development of 3D Gaussian Splatting, the methodology of 3D Gaussian Splatting is just used. Hence, for a more detailed explanation on how, 3D Gaussian Splatting, is to be used in the generation of a 3D representation from a set of 2D images reference is given to the literature, see e.g. Tong Wu, Yu-Jie Yuan, Ling-Xiao Zhang, Jie Yang, Yan-Pei Cao, Ling-Qi Yan, Lin Gao; "Recent Advances in 3D Gaussian Splatting"; arXiv:2403.11134; 17 Mar 2024.

The circuitry 202 is further configured to execute a quality control function 216. The quality control function 216 is configured to perform quality control of the package 110. This by inputting the rendered 3D representation of the package 110 into the machine learning model 210. The quality control function 216 may further be configured to receive the output from the machine learning model 210. As mentioned above, the output from the quality control function 216 may be one or more of a type of defect of a defective package, a location of a defect of a defective package, and a severity of the defect. Again, note that the output from the machine learning model 210 may be that no defect is identified.

The circuitry 202 may further be configured to execute a reporting function 218. The reporting function 218 is configured to determine identification data, ID, of the package and associate the ID with the output from the machine learning model 210. The identification together with the out from the machine learning model 210 may be stored in a database.

Next, generation of a training dataset for a machine learning model 210 and training of the machine learning model 210 will be discussed. Especially for a supervised machine learning model 210.

Fig. 3 illustrates a method 300 of generating a training dataset for the machine learning model 210. Especially, training data to be used to train the machine learning model 210 to output one or more of a type of defect of a defective package, a location of a defect of a defective package, and a severity of the defect. Once again, note that the output from the machine learning model 210 may be that no defect is identified.

The method 300 comprises, for each of a plurality of reference packages having a respective known defect, obtaining S302 a plurality of images depicting the reference package from a plurality of view angles. The obtaining S302 of the plurality of images depicting the reference package from a plurality of view angles is preferably made using an image capturing device 106, 106a-e as discussed above, in order to avoid undue repletion reference is made to the discussion above.

Next, a 3D representation of the respective reference package is rendered S304. The rendering S304 of the 3D representation of the respective reference package is performed using a 3D rendering function having as input the plurality of images. In line with the discussion above, the 3D representation may be of the full package or of a portion of the package. The 3D rendering function to be used for this is preferably the 3D rendering function 214 discussed above, in order to avoid undue repletion reference is made to the discussion above.

Thereafter, the 3D representation of the respective reference package is associated S306 with the respective known defect.

Finally, the respective 3D representations of the plurality of reference packages and the thereto associated known defects are stored S308 as the training dataset.

The method 300 of generating a training dataset for the machine learning model 210 may further comprise to classify the defects of the reference packages. The task of classifying the defects of the reference packages comprises sending a defect classifying task to a user group. The user group comprising one or more expert users of the type of package the reference packages belongs to. Hence, the classifying is typically performed by one or more humans. The defect classifying task may comprise one or more images of the respective reference package the rendered 3D representation of the respective reference package and/or the reference package itself. The task of classifying the defects of the reference packages further comprises receiving a defect classifying result from the user group. The defect classifying result is thereafter set as the known defect.

Once the training dataset has been generated the machine learning model 210 may be trained such that it is configured to identify and classify defects in 3D representations of packages by outputting one or more of a type of defect of a defective package, a location of a defect of a defective package, and a severity of the defect. The training of the machine learning model 210 is made by adjusting weights of the machine learning model 210 as a function of the training dataset. It is readily understood that the machine learning model 210 may be tuned once new/additional training data is available.

The quality control of packages discussed herein may be implemented either offline or online. By offline is meant to perform the quality control on packages already produced in a food packaging system and extracted therefrom. By online is meant to perform the quality control on packages while they are still within the food packaging system, typically still within a packaging machine of the food packaging system.

In Fig. 4 a food packaging system 100 is illustrated in which a quality control system 250 as discussed is implemented online. The food packaging system 100 comprises a packaging machine 104 and the quality control system 250. The packaging machine 104 is configured to produce packages 110 filled with food. The image capturing device 106 of the quality control system 250 is configured to capture images 108 depicting a package 110 produced in the packaging machine 104. More precisely, the image capturing device 106 is configured to capture images 108 depicting a package 110 produced in the packaging machine 104 online in the food packaging system 100.

In more detail, the packaging machine 104 may be a roll-fed packaging machine used for producing packages. More specifically, the packaging machine 104 may be used for packaging liquid food products in carton-based packages. Already in the 1940s this type of packaging machines was introduced by Tetra Pak^{™} and it is today a well-known approach for packaging milk and other liquid food products in a safe and cost-efficient manner. The general approach can also be used for non-liquid food products, such as potato crisps. Alternatively, the packaging machine 104 may be a blank-fed packaging machine in which the package material is provided as blanks to the packaging machine 104. The packaging material is often printed and prepared in packaging material production centers, also referred to as converting factories, and is shipped to a site where the packaging machine 104 is placed, e.g. a dairy. For a roll-fed packaging machine 104 the packaging material is loaded onto a reel 102 before being transported. After arriving at the site, the reel 102 is placed in the packaging machine 104, or fed into the packaging machine 104 as illustrated in herein. In case of the packaging machine 104 being a black-fed packaging machine, the package material is provided as blanks to the packaging machine 104. Typically the package material comprising a carton layer and at least one plastic layer.

In case the packaging machine 104 being roll-fed packaging machine, during production a web 103 of packaging material is fed from the reel 102 through the packaging machine 104. Even though not illustrated in Fig. 4, the packaging material may pass through a sterilization device, e.g. a hydrogen peroxide bath or an LVEB (Low-Voltage Electron Beam) station, for ensuring that the web 103 is free from unwanted microorganisms. Before providing the food product, a tube can be formed from the web 103 by forming a longitudinal sealing. The longitudinal sealing is formed by forming a tube of a web of packaging material such that a first longitudinal edge section of the web overlaps a second longitudinal edge section of the web, attaching the first and second longitudinal edge sections, and applying a protective strip to the overlap between the first and second longitudinal edge sections on an inside of the tube. The food product can be fed into the tube via a filling pipe and a valve may be used for regulating a flow through the filling pipe. A lower end of the tube can be fed into a folding device in which a transversal sealing is made, the tube is folded according to folding lines, also referred to as weakening lines, and cut off such that packages 110 can be formed.

In case the food packaging system 100 comprises a quality control system 250 for performing quality control of packages produced in the packaging machine 104, the quality control apparatus 200 may be a separate unit from the packaging machine 104 and communicatively connected thereto. Alternatively, the quality control apparatus 200 may be an integral unit of the packaging machine 104, either as part of the control system of the packaging machine 104 or communicatively connected thereto. For the online quality control as discussed here, the quality control apparatus 200 obtain the plurality of images 108 depicting a specific package 110 from a plurality of view angles through any suitable communication protocol. Optionally, identification data, ID, of the specific package may also be received. Further, based on executed quality control, the quality control apparatus 200 may transmit a determined action to be performed to the packaging machine 104. Optionally, the quality control apparatus 200 may transmit updated settings to the packaging machine 104.

As readily understood by the person skilled in the art, the food packaging system 100 may comprise additional components not disclosed in Fig. 4 or discussed herein. For example, the food packaging system 100 typically comprises a filling machine configured to fill the packages with food, such as a diary product, juice, etc. The food packaging system 100 may further comprise a package reject unit. The package reject unit may be configured to either keep or discard packages based on a quality control made at the quality control apparatus 200. Any rejected packages may be collected by a recycling unit for recycling the product of the rejected packages. The accepted packages may be sent to an end station of the food production system 100 where they can be collected and transported away, e.g. to a warehouse.

In connection with Fig. 5 a quality control method 500 of performing quality control on a package 110 produced in the food packaging system 100 will be discussed. The quality control method 500 comprises obtaining S502 a plurality of images 108 depicting the package 110 from a plurality of view angles. The plurality of images 108 is preferably obtained from the image capturing device 106, 106a-e as discussed above.

The quality control method 500 further comprises rending S504, using a 3D rendering function 214 having as input the plurality of images 108, a 3D representation of the package.

The quality control method 500 further comprises performing S506 a quality control on the package 110 by inputting the rendered 3D representation of the package into the machine learning model 210 being trained in accordance with the discussion above and receiving an output from the machine learning model 210. As discussed above, the output comprises one or more of a type of defect of a defective package, a location of a defect of a defective package, and a severity of the defect. Note that the output from the machine learning model 210 may be that no defect is identified.

Additionally, variations to the disclosed variants can be understood and effected by the skilled person in practicing the claimed invention, from a study of the drawings, the disclosure, and the appended claims.

## Claims

1. A quality control apparatus (200) for quality control of packages (110), the quality control apparatus (200) comprising:
a memory (208) storing a machine learning model (210) being trained to identify defects in 3D representations of packages; and
circuitry (202) configured to execute:
an image obtaining function (212) configured to, from an image capturing device (106, 106a-e), obtain a plurality of images (108) depicting a package from a plurality of view angles;
a 3D rendering function (214) configured to render a 3D representation of the package having as input the plurality of images (108); and
a quality control function (216) configured to perform quality control of the package by inputting the rendered 3D representation of the package into the machine learning model (210).

2. The quality control apparatus (200) according to claim 1, wherein the 3D rendering function (214) is based on Neural Radiance Field, NeRF, employing a fully connected deep neural network and being configured to render the 3D representation of the package using the plurality of images of the package captured at the plurality of views as input.

3. The quality control apparatus (200) according to claim 1, wherein the 3D rendering function (214) is based on 3D Gaussian Splatting and being configured to render the 3D representation of the package using the plurality of images of the package captured at the plurality of views as input.

4. The quality control apparatus (200) according to any one of claims 1-3, wherein the machine learning model (210) has been trained on 3D representations of reference packages with known defects.

5. The quality control apparatus (200) according to any one of claims 1-4, wherein the machine learning model (210) is configured to output one or more of a type of defect of a defective package, a location of a defect of a defective package, and a severity of the defect, wherein the circuitry (202) is further configured to execute a reporting function (218) configured to determine identification data, ID, of the package and associate the ID with the output from the machine learning model (210).

6. A method (300) of generating a training dataset for a machine learning model (210) configured to output one or more of a type of defect of a defective package, a location of a defect of a defective package, and a severity of the defect, the method (300) comprising:
for each of a plurality of reference packages having a respective known defect:
obtaining (S302) a plurality of images depicting the reference package from a plurality of view angles,
rendering (S304) a 3D representation of the reference package using a 3D rendering function having as input the plurality of images, and
associating (S306) the 3D representation with the respective known defect; and
storing (S308) the respective 3D representations of the plurality of reference packages and the thereto associated known defects as the training dataset.

7. The method according to claim 6, further comprising:
sending a defect classifying task to a user group, wherein the defect classifying task comprises one or more images of the respective reference package and/or the rendered 3D representation of the respective reference package,
receiving a defect classifying result from the user group, and
setting the defect classifying result as the known defect.

8. A training method of training a machine learning model (210) configured to identify defects in 3D representations of packages by outputting one or more of a type of defect of a defective package, a location of a defect of a defective package, and a severity of the defect, the training method comprising:
training the machine learning model by adjusting weights of the machine learning model as a function of a training dataset generated in accordance with claim 6 or 7.

9. A quality control method (500) of performing quality control on a package (110) produced in a packaging machine, the quality control method comprising:
obtaining (S502) a plurality of images (108) depicting the package (110) from a plurality of view angles;
rending (S504), using a 3D rendering function (214) having as input the plurality of images (108), a 3D representation of the package;
performing (S506) a quality control on the package (110) by inputting the rendered 3D representation of the package into a machine learning model (210) being trained in accordance with claim 8 and receiving an output from the machine learning model.

10. A non-transitory computer-readable storage medium storing one or more programs configured to be executed by one or more processors of a processing system, the one or more programs comprising instructions for performing the method according to claim 9.

11. A quality control system (250) for quality control of packages, the quality control system comprising:
an image capturing device (106, 106a-e) configured to capture a plurality of images (108) depicting a package (110) from a plurality of view angles; and
a quality control apparatus (200) according to any one of claims 1-5.

12. The quality control system (250) according to claim 11, wherein the image capturing device (106a-e) is a multicamera set-up configured to capture the plurality of images (108) depicting the package (110) from the plurality of view angles.

13. The quality control system (250) according to claim 11, wherein the image capturing device (106) is a camera on a robotic arm configured to capture the plurality of images (108) depicting the package (110) from the plurality of view angles.

14. A food packaging system (100) comprising:
a packaging machine (104) configured to produce packages filled with food; and
a quality control system (250) according to any one of claims 11-13, wherein the image capturing device (106) is configured to capture images (108) depicting a package (110) produced in the packaging machine (104).

15. The food packaging system (100) according to claim 14, wherein the image capturing device (106) is configured to capture images (108) depicting a package (110) produced in the packaging machine (104) online in the food packaging system (100).
